# EUROPÄISCHE PATENTSCHRIFT

(11) **EP 1 982 373 B1**
(45) Veröffentlichungstag und Bekanntmachung des Hinweises auf die Patenterteilung: **02.04.2014**
(21) Anmeldenummer: 06706765.2
(22) Anmeldetag: 09.02.2006
(51) Int. Cl.: H01M 8/02, H01M 8/10

(54) **GASDIFFUSIONSEINHEIT**
GAS DIFFUSION UNIT
UNITÉ DE DIFFUSION DE GAZ

(43) Veröffentlichungstag der Anmeldung: 22.10.2008
(73) Patentinhaber: Carl Freudenberg KG, 69469 Weinheim (DE)
(72) Erfinder: GERDING, Lars, 67663 Kaiserslautern (DE)
(86) Internationale Anmeldenummer: PCT/EP2006/001125
(87) Internationale Veröffentlichungsnummer: WO 2007/090423

(56) Entgegenhaltungen:
- WO-A-2004/100295
- WO-A-2004/114451
- US-A1- 2005 095 490

## Beschreibung

### Technisches Gebiet

Die Erfindung betrifft eine Membranelektrodeneinheit umfassend eine Gasdiffusionseinheit für eine Brennstoffzelle, umfassend zumindest zwei flächig ausgebildete Gasdiffusionsschichten an deren Rändern Dichtungen angeordnet sind.

### Stand der Technik

Brennstoffzellen bestehen aus einer Aneinanderreihung von einzelnen Zellen. Diese bilden einen so genannten Stack oder Zellstapel, in den häufig noch zusätzliche Komponenten zur Kühlung integriert werden. Ein Stack kann dabei aus bis zu 500 einzelnen Zellen bestehen. Eine Zelle zeichnet sich durch einen schichtweisen Aufbau aus, wobei eine Zelle aus einer Anordnung gebildet durch zwei Bipolarplatten mit Gasverteilerstruktur, zwei Gasdiffusionsschichten und einer Reaktionsschicht in Form einer katalysierten Membran besteht. Jeweils zwei Gasdiffusionsschichten umgeben dabei die Reaktionsschicht und bilden eine Membran-Elektroden-Anordnung. Zur Vermeidung von Leckagen ist die Membran-Elektroden-Anordnung oder die Bipolarplatte mit einer Dichtung ausgerüstet. Leckagen können zu einer Zerstörung der Brennstoffzelle führen und senken den Wirkungsgrad der Brennstoffzelle. Aus der US 2003/0082430 A1 ist eine Gasdiffusionseinheit bekannt, bei der die Dichtung an der flächig ausgebildeten Gasdiffusionsschicht angespritzt ist. Dabei ist es bei der Montage schwierig, die Gasdiffusionsschichten so zueinander auszurichten, dass die Berührungsbereiche von Gasdiffusionsschicht und Reaktionsschicht sowie von Gasdiffusionsschicht und Bipolarplatte leckagefrei abgedichtet sind.

Aus der WO 2004/100295 A1 ist eine Gasdiffusionseinheit mit zwei flächig ausgebildeten Gasdiffusionsschichten bekannt, an deren Rändern Dichtungen angeordnet sind. Eine derartige Anordnung zeigen auch die US 2005/0095490 A1 und die WO 2004/114451 A1.

### Darstellung der Erfindung

Der Erfindung liegt die Aufgabe zugrunde, eine Membran-Electroden-Einheit umfassend eine Gasdiffusionseinheit bereitzustellen, die einfacher und sicher dichtend montierbar ist.

Diese Aufgabe wird mit den Merkmalen von Anspruch 1 und 12 gelöst. Auf vorteilhaften Ausgestaltungen nehmen die Unteransprüche Bezug.

Zur Lösung der Aufgabe sind zumindest zwei Gasdiffusionsschichte einer Membran-Elektroden-Einheit dadurch gelenkig miteinander verbunden, dass die Dichtungen der Gasdiffusionsschichten miteinander verbunden sind, wobei die Dichtungen durch einen Verbindungsstreifen oder durch Stege miteinander verbunden sind. Dabei ist im gebrauchsfertigen Zustand zwischen den Gasdiffusionsschichten eine Membran angeordnet. Durch die gelenkige Verbindung ergibt sich eine definierte Schwenkachse um die die Gasdiffusionsschichten relativ zueinander schwenkbar sind. Zur Herstellung einer Membran-Elektroden-Einheit wird zunächst die Membran zwischen den Schichten angeordnet und danach werden die Gasdiffusionsschichten aufeinander zu geschwenkt. Durch die festgelegte Schwenkbewegung ist gewährleistet, dass die beiden Gasdiffusionsschichten und deren Dichtungen ausgerichtet aufeinander angeordnet sind. Durch die genaue Ausrichtung der Dichtungen werden Leckagen zuverlässig verhindert. In anderen Ausgestaltungen kann die Dichtung auf einem Trägerrahmen angeordnet sein, der aus einem polymeren Werkstoff besteht.Durch die Verbindung kann mit einfachen Mitteln und ohne zusätzliche Elemente eine bewegliche Verbindung der Gasdiffusionsschichten geschaffen werden. Der Verbindungsstreifen stellt dabei ein Filmscharnier dar, durch das die Gasdiffusionsschichten schwenkbar miteinander verbunden sind. Der Verbindungsstreifen stellt gleichzeitig einen definierten Bereich dar, der ein Überströmen des Materials bei der Fertigung ermöglicht. Dadurch kann die Herstellung aller Dichtungen in einem Arbeitsgang erfolgen. Die Stege stellen ebenfalls eine schwenkbare und darüber hinaus materialsparende Verbindung der Gasdiffusionsschichten dar.

Die Dichtungen können materialeinheitlich und einstückig ausgebildet sein. Dadurch sind die Dichtungen der Gasdiffusionsschichten miteinander verbunden. Die Dichtungen sind kostengünstig herstellbar.

Der Verbindungsstreifen oder der Steg können zumindest einseitig eine in Längsrichtung verlaufende Kerbe oder Verjüngung aufweisen. Durch die Kerbe und die Verjüngung ergibt sich eine genauere Festlegung der Bewegungsachse und damit eine bessere Ausrichtung der Gasdiffusionsschichten, was wiederum in einer besseren Dichtwirkung resultiert.

Die Dichtungen können aus einem elastischen, polymeren Werkstoff bestehen. Elastomere Werkstoffe sind elastisch, hochverformbar und einfach zu verarbeiten. Die Dichtungen können beispielsweise aus Silikon, FKM (Fluorelastomer), EPDM (Ethylen-Propylen-Dien-Monomer), PIB (Polyisobutylen), PU (Polyurethan), BR (Butadien) oder einer Mischung hieraus bestehen. Durch die Mischung lassen sich gezielt die vorteilhaften Eigenschaften der einzelnen Werkstoffe kombinieren. Fluorelastomere zeichnen sich durch eine gute Temperatur- und Chemikalienbeständigkeit aus, die sich in der Brennstoffzellenumgebung als besonders vorteilhaft erweisen.

In anderen Ausgestaltungen sind auch thermoplastische Werkstoffe, beispielsweise thermoplastische Elastomere (TPE) als Dichtungswerkstoff denkbar. Letztere weisen insbesondere den Vorteil auf, dass sie sich wie thermoplastische Materialien in kurzen Taktzeiten verarbeiten lassen.

Ein Vorteil aller aufgeführten Werkstoffe ist, dass sie sich in formgebenden Verfahren verarbeiten lassen.

Denkbare Fertigungsverfahren zum Anbringen einer Dichtung an die Gasdiffusionsschicht sind Spritzgießen, Pressen, Kleben und Gießen.
Pressen ist dabei ein insbesondere durch geringe Werkzeug- und Maschinenkosten günstiges Fertigungsverfahren, das es ermöglicht die Dichtungen mit den brennstoffzellentypischen engen Toleranzen, bei hoher Maßhaltigkeit herzustellen.
Kleben ermöglicht eine baukastenartige Fertigung, in der verschiedene Ausführungen von Dichtungen mit verschiedenen Ausführungen von Gasdiffusionsschichten kombiniert werden können, und ist durch seine Flexibilität besonders bei kleineren Stückzahlen geeignet.
Die Dichtungen können an die Gasdiffusionsschicht angespritzt sein. Spritzgießen ist ein großserientaugliches Fertigungsverfahren. Durch das Anspritzen an die Gasdiffusionsschichten bildet sich eine umlaufende Dichtung durch die eine zwischen den Gasdiffusionsschichten angeordnete Reaktionsschicht vollständig umschlossen wird, so dass Leckagen vermieden werden. Beim Spritzgießen ist vorteilhaft, dass das Dichtungsmaterial welches an die Gasdiffusionsschicht angespritzt wird, in die Gasdiffusionsschicht eindringt. Das Eindringen erfolgt insbesondere bei Gasdiffusionsschichten die aus einem Vliesstoff gebildet sind. Dadurch verbessert sich nochmals die Dichtwirkung sowie die Handhabbarkeit.

Die Dichtungen können zumindest einen wenigstens teilweise umlaufenden Dichtwulst aufweisen. Der Dichtwulst kann insbesondere V-förmig ausgebildet sein. Ein Dichtwulst verbessert die Dichtwirkung und vereinfacht die Montage der Membran-Elektroden-Einheit. Zur Montage werden die miteinander verbundenen Gasdiffusionsschichten mit der dazwischen angeordneten Membran beispielsweise durch Schraubverbindungen zwischen Bipolarplatten miteinander verpresst. Aufgrund der geringen Kontaktfläche des Dichtwulstes ist die Anpresskraft zunächst gering, steigt aber mit zunehmender Komprimierung stetig an. Nach vollständiger Komprimierung des Dichtwulstes gelangt der benachbarte eben ausgebildete Dichtungsbereich in Eingriff und die Anpresskraft steigt überproportional an, was als Indikator für eine korrekte Anpresskraft und damit Dichtkraft sein kann. Ein Überpressen der Dichtung durch zu große Anpresskraft wird dadurch vermieden. Des Weiteren gleicht der Dichtwulst Toleranzen und Unebenheiten in der abzudichtenden Oberfläche aus.

Die Dicke der Gasdiffusionseinheit kann kleiner als 2 mm sein. Das ermöglicht die Gestaltung besonders kompakter Brennstoffzellen insbesondere für mobile Anwendungen oder für kleine elektrische Geräte.

Die Dichtungen können zumindest einen wenigstens teilweise umlaufenden Dichtwulst und zumindest eine umlaufende Ausnehmung aufweisen, wobei die Ausnehmung benachbart zu dem Dichtwulst angeordnet ist. Die Ausnehmungen stellen Raum zur Verfügung in den das Material des Dichtwulstes bei zunehmender Anpresskraft verdrängt werden kann. Dadurch werden starke Dehnungen vermieden, die zum Reißen oder Knicken des Dichtwulstes führen können. Die Dichtwirkung verbessert sich.

Die Dichtungen können zusätzlich um die Durchbrüche zur Zufuhr der Reaktions- und Kühlmedien in den Bipolarplatten umlaufen. Da diese Bereiche besonders empfindlich auf Versatz der Dichtung bei der Montage reagieren, bietet die Erfindung hier zusätzliche Vorteile. Auf diese Weise werden die verschiedenen Anforderungen an Brennstoffzellendichtungen kostengünstig mit nur einem Dichtelement erfüllt.

Die Gasdiffusionsschicht kann einen Vliesstoff umfassen. Vliesstoffe sind kostengünstig und bilden eine stabile Gasdiffusionsschicht. Des Weiteren bildet der Vliesstoff einen guten Haftgrund für das Dichtungsmaterial, da aufgrund der Porosität des Vliesstoffes das Material der Dichtung in den Vliesstoff eindringen kann. Der Vliesstoff ist dabei in der Regel karbonisiert. Dabei kann die Gasdiffusionsschicht einen porösen, Kohlefaser- oder Kohlenstoff-Objekte umfassenden Vliesstoff aufweisen. Kohlefasern verbessern die elektrische Leitfähigkeit der Gasdiffusionsschicht.

### Kurzbeschreibung der Zeichnung

Einige Ausführungsbeispiele der erfindungsgemäßen Gasdiffusionseinheit werden nachfolgend anhand der Figuren näher erläutert. Diese zeigen, jeweils schematisch:
- Fig. 1: eine Gasdiffusionseinheit mit Verbindungsstreifen;
- Fig. 2: eine Gasdiffusionseinheit mit Verbindungsstegen;
- Fig. 3: eine Gasdiffusionseinheit nach Spritzgießvorgang;
- Fig. 4: eine Gasdiffusionseinheit mit eingelegter Reaktionsschicht;
- Fig. 5: eine gebrauchsfertige Gasdiffusionseinheit;
- Fig. 6: eine Brennstoffzelle mit erfindungsgemäßer Gasdiffusionseinheit;
- Fig. 7: eine verjüngte gelenkige Verbindung der Gasdiffusionseinheiten;
- Fig. 8: eine gekerbte gelenkige Verbindung der Gasdiffusionseinheiten;
- Fig. 9: eine Gasdiffusionseinheit mit Verbindungsstreifen und Dichtungselementen um die Bereiche der Reaktionsmedienzufuhr.

### Ausführung der Erfindung

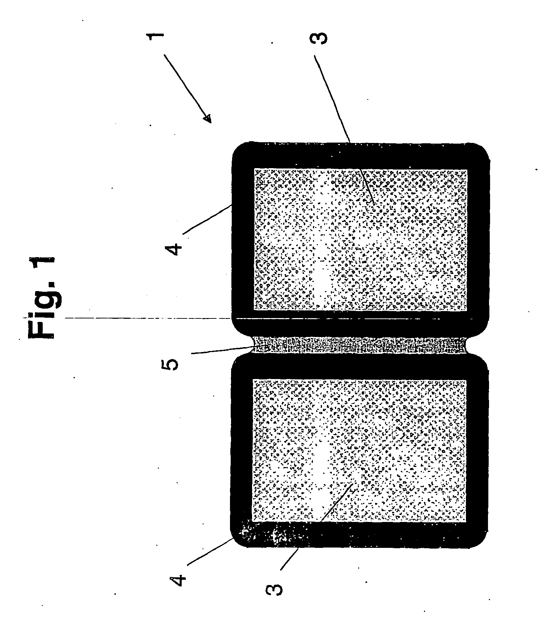

Figur 1 zeigt eine Gasdiffusionseinheit 1 für eine Brennstoffzelle 2, bestehend aus zwei flächig ausgebildeten Gasdiffusionsschichten 3. Die Gasdiffusionsschichten 3 bestehen aus einem karbonisierten Vliesstoff, wobei an den Rändern der Gasdiffusionsschichten 3 Dichtungen 4 angeordnet sind. Die Dichtungen 4 bestehen in dieser Ausführung aus einer Zusammensetzung mit Silikon und wurden mittels Spritzgießen an den Gasdiffusionsschichten 3 fixiert, wobei das Dichtungsmaterial in die Poren des Vliesstoffes eingedrungen ist. In anderen Ausführungen kann die Dichtung auch aus thermoplastischen Elastomeren, EPDM (Ethylen-Propylen-Dien-Monomer), PIB (Polyisobutylen), PU (Polyurethan), BR (Butadien) oder einer Zusammensetzung aus diesen Werkstoffen einschließlich Silikon bestehen. Die Dichtungen 4 beider Gasdiffusionsschichten 3 sind materialeinheitlich und einstückig ausgebildet und in dieser Ausführung über einen Verbindungsstreifen 5 miteinander verbunden. Durch den Verbindungsstreifen 5 sind die beiden Gasdiffusionsschichten 3 gelenkig miteinander verbünden.

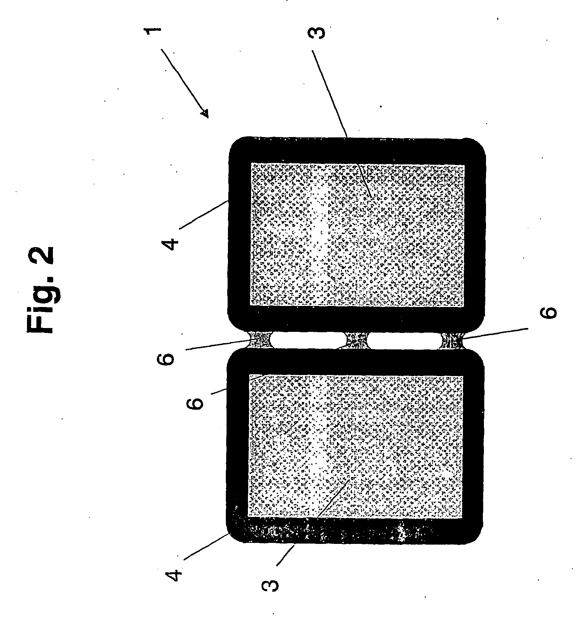

Figur 2 zeigt eine Gasdiffusionseinheit 1 gemäß Figur 1, wobei die Dichtungen 4 in dieser Ausführung durch Stege 6 miteinander verbunden sind.

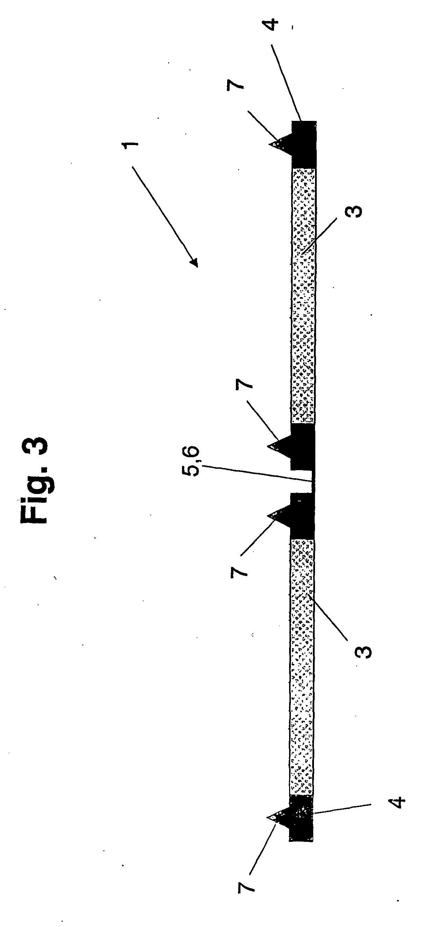

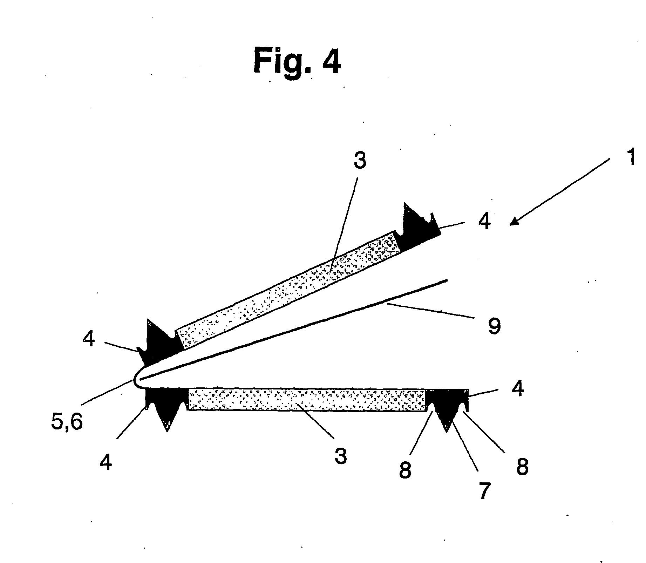

In den Figuren 3 bis 5 sind die Herstellungsschritte einer Gasdiffusionseinheit 1 gezeigt, bei denen eine Membran 9 zwischen den Gasdiffusionsschichten 3 angeordnet wird. Die Membran 9 besteht aus einem Polymer. Zur Herstellung wird die Membran 9 auf einer Gasdiffusionsschicht 3 angeordnet und die beiden Gasdiffusionsschichten 3 aufeinander zu geschwenkt, so dass die Membran 9 zwischen den Gasdiffusionsschichten 3 angeordnet ist. Durch die gelenkige Verbindung der Gasdiffusionsschichten 3 ist deren Schwenkbewegung festgelegt, so dass sich die beiden Gasdiffusionsschichten 3 selbständig zentrieren und die Dichtungen 4 gegenseitig zur Anlage kommen und dadurch die Membran 9 zu beiden Seiten abdichten.

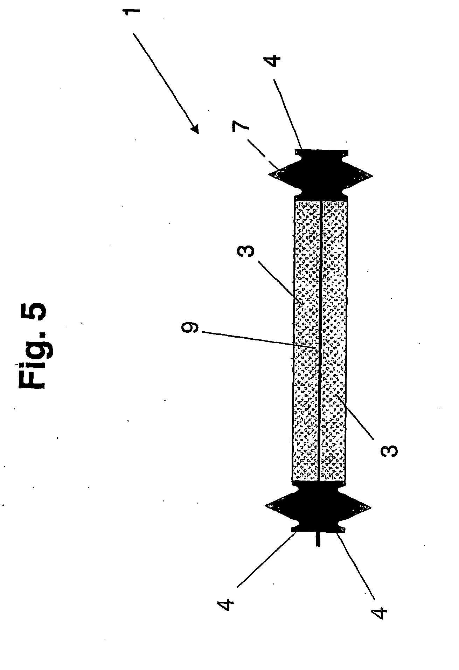

Die Dichtungen 4 weisen einen umlaufenden Dichtwulst 7 auf, der nach der Montage auf der der Membran 9 abgewandten Seite angeordnet ist und in Richtung auf die Bipolarplatte (nicht dargestellt) weist. Die in Figur 5 gezeigte Dichtung 4 weist neben dem Dichtwulst 7 zusätzlich zwei umlaufende Ausnehmungen 8 auf, die beidseitig benachbart zu dem Dichtwulst 7 angeordnet sind.

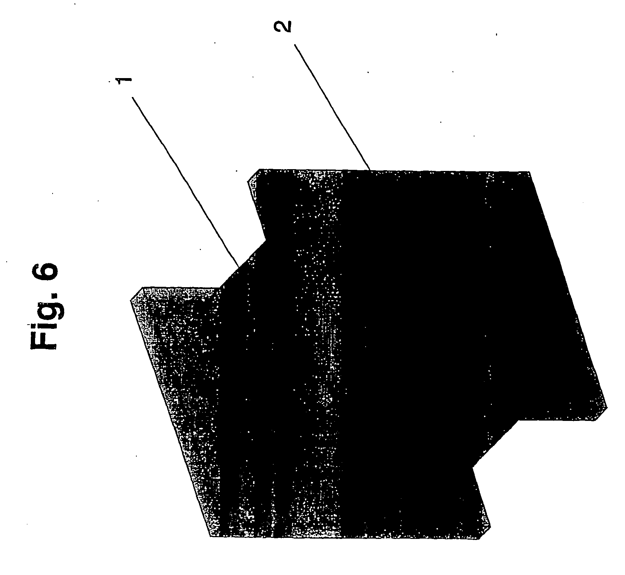

Figur 6 zeigt eine Brennstoffzelle 2 für mobile Anwendungen. Die Gasdiffusionseinheiten 1, die in der Brennstoffzelle 2 angeordnet sind, weisen eine Dicke von weniger als einen Millimeter auf.

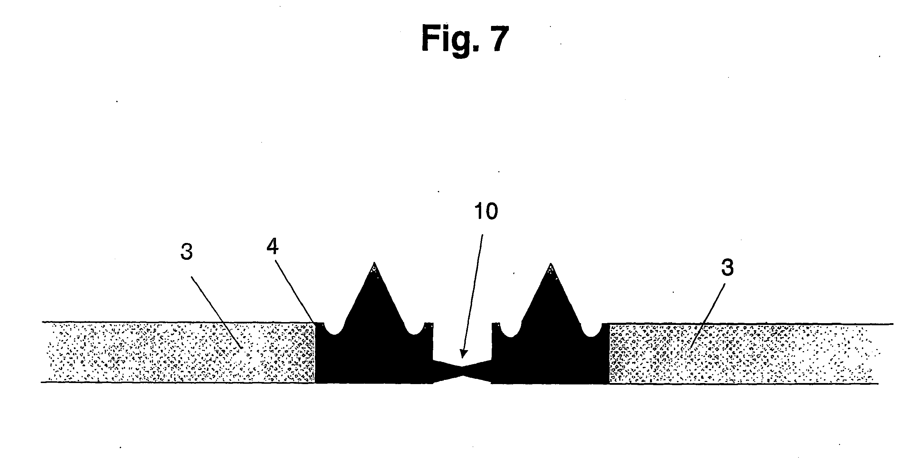

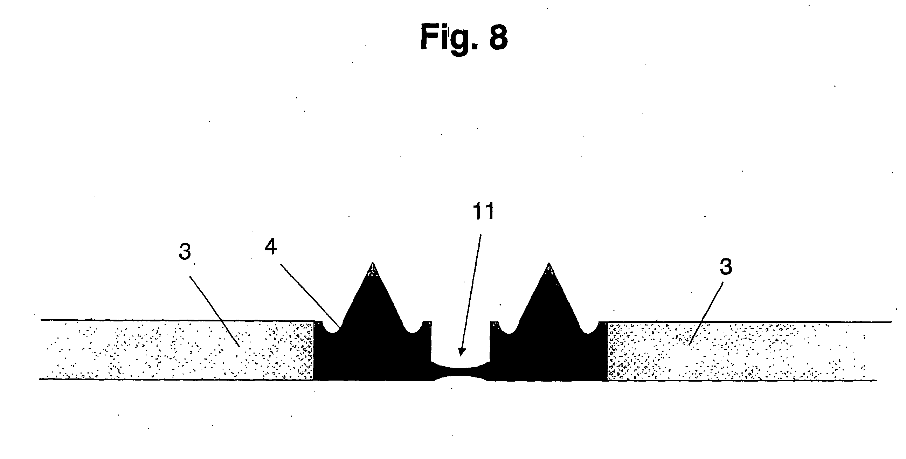

Figur 7 zeigt eine Verbindung der Gasdiffusionsschichten 3 die in der Ausführung gemäß Figur 1 durch einen Verbindungsstreifen 5 und in der Ausführung gemäß Figur 2 durch Stege 6 gebildet ist. Die Verbindung weist in etwa mittig beidseitig eine Kerbe 10 auf. In der Ausführung gemäß Figur 8 weist die Verbindung in etwa mittig beidseitig eine kreissegmentförmige Verjüngung 11 auf.

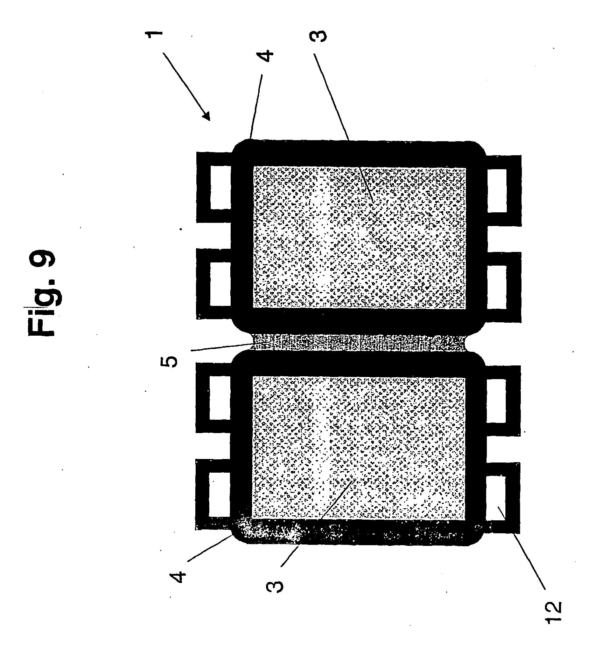

Figur 9 zeigt eine Gasdiffusionseinheit 1 gemäß Figur 1, wobei die Dichtungen 4 zusätzlich die Bereiche der Reaktionsmedienzufuhr 12 umschließen.

## Patentansprüche

1. Eine Membranelektrodeneinheit umfassend eine Gasdiffusionseinheit (1) für eine Brennstoffzelle (2), umfassend zumindest zwei flächig ausgebildete Gasdiffusionsschichten (3) an deren Rändern Dichtungen (4) angeordnet sind, **dadurch gekennzeichnet, dass** zumindest zwei Gasdiffusionsschichten (3) dadurch gelenkig miteinander verbunden sind, dass die Dichtungen (4) der Gasdiffusionsschichten (3) miteinander verbunden sind, wobei die Dichtungen (4) durch einen Verbindungsstreifen (5) oder durch Stege (6) miteinander verbunden sind.

2. Membranelektrodeneinheit nach Anspruch 1, **dadurch gekennzeichnet, dass** die Dichtungen (4) materialeinheitlich und einstückig ausgebildet sind.

3. Membranelektrodeneinheit nach Anspruch 1 oder 2, **dadurch gekennzeichnet, dass** der Verbindungsstreifen (5) oder der Steg (6) zumindest einseitig eine in Längsrichtung des Verbindungsstreifens (5) verlaufende Kerbe (10) oder Verjüngung (11) aufweist.

4. Membranelektrodeneinheit nach einem der Ansprüche 1 bis 3, **dadurch gekennzeichnet, dass** die Dichtungen (4) aus einem elastischen, polymeren Werkstoff bestehen.

5. Membranelektrodeneinheit nach einem der Ansprüche 1 bis 4, **dadurch gekennzeichnet, dass** die Dichtungen (4) aus Silikon, FKM, EPDM, PIB, TPE oder aus einer Mischung hieraus bestehen.

6. Membranelektrodeneinheit nach einem der Ansprüche 1 bis 5, **dadurch gekennzeichnet, dass** die Dichtungen (4) in einem formgebenden Verfahren hergestellt sind.

7. Membranelektrodeneinheit nach einem der Ansprüche 1 bis 6, **dadurch gekennzeichnet, dass** die Dichtungen (4) an die Gasdiffusionsschicht (3) angespritzt sind.

8. Membranelektrodeneinheit nach einem der Ansprüche 1 bis 7, **dadurch gekennzeichnet, dass** die Dichtungen (4) zumindest einen wenigstens teilweise umlaufenden Dichtwulst (7) aufweisen.

9. Membranelektrodeneinheit nach einem der Ansprüche 1 bis 8, **dadurch gekennzeichnet, dass** die Dicke der Gasdiffusionsschicht (3) kleiner als 2 mm ist.

10. Membranelektrodeneinheit nach einem der Ansprüche 1 bis 9, **dadurch gekennzeichnet, dass** die Dichtungen (4) zumindest einen wenigstens teilweise umlaufenden Dichtwulst (7) und zumindest eine wenigstens teilweise umlaufende Ausnehmung (8) aufweisen, wobei die Ausnehmung benachbart zu dem Dichtwulst (7) angeordnet ist.

11. Membranelektrodeneinheit nach einem der Ansprüche 1 bis 10, **dadurch gekennzeichnet, dass** die Dichtungen (4) zusätzlich die Durchbrüche für die Zufuhr der Reaktionsmedien (12) in den Bipolarplatten abdichten.

12. Verwendung einer Gasdiffusionseinheit (1) für eine Brennstoffzelle (2), umfassend zumindest zwei flächig ausgebildete Gasdiffusionsschichten (3) an deren Rändern Dichtungen (4) angeordnet sind, **dadurch gekennzeichnet, dass** zumindest zwei Gasdiffusionsschichten (3) dadurch gelenkig miteinander verbunden sind, dass die Dichtungen (4) der Gasdiffusionsschichten (3) miteinander verbunden sind, wobei die Dichtungen (4) durch einen Verbindungsstreifen (5) oder durch Stege (6) miteinander verbunden sind zur Herstellung einer Membranelektrodeneinheit.

## Claims

1. Membrane electrode unit comprising a gas diffusion unit (1) for a fuel cell (2), comprising at least two gas diffusion layers (3) which are formed in a sheet-like manner and on the edges of which seals (4) are arranged, **characterized in that** at least two gas diffusion layers (3) are connected in an articulated manner to one another in such a manner that the seals (4) of the gas diffusion layers (3) are connected to one another, wherein the seals (4) are connected to one another by a connecting strip (5) or by webs (6).

2. Membrane electrode unit according to Claim 1, **characterized in that** the seals (4) are formed from the same material and as a single piece.

3. Membrane electrode unit according to Claim 1 or 2, **characterized in that** the connecting strip (5) or the web (6) has, at least on one side, a notch (10) or tapered portion (11) running in the longitudinal direction of the connecting strip (5).

4. Membrane electrode unit according to one of Claims 1 to 3, **characterized in that** the seals (4) are composed of an elastic polymer material.

5. Membrane electrode unit according to one of Claims 1 to 4, **characterized in that** the seals (4) are composed of silicone, FKM, EPDM, PIB, TPE or of a mixture thereof.

6. Membrane electrode unit according to one of Claims 1 to 5, **characterized in that** the seals (4) are produced in a shaping method.

7. Membrane electrode unit according to one of Claims 1 to 6, **characterized in that** the seals (4) are injection-moulded onto the gas diffusion layer (3).

8. Membrane electrode unit according to one of Claims 1 to 7, **characterized in that** the seals (4) have at least one at least partially encircling sealing bead (7).

9. Membrane electrode unit according to one of Claims 1 to 8, **characterized in that** the thickness of the gas diffusion layer (3) is smaller than 2 mm.

10. Membrane electrode unit according to one of Claims 1 to 9, **characterized in that** the seals (4) have at least one at least partially encircling sealing bead (7) and at least one at least partially encircling recess (8), wherein the recess is arranged adjacent to the sealing bead (7).

11. Membrane electrode unit according to one of Claims 1 to 10, **characterized in that** the seals (4) additionally seal off the apertures for the supply of the reaction media (12) in the bipolar plates.

12. Use of a gas diffusion unit (1) for a fuel cell (2), comprising at least two gas diffusion layers (3) which are formed in a sheet-like manner and on the edges of which seals (4) are arranged, **characterized in that** at least two gas diffusion layers (3) are connected in an articulated manner to one another in such a manner that the seals (4) of the gas diffusion layers (3) are connected to one another, wherein the seals (4) are connected to one another by a connecting strip (5) or by webs (6) in order to produce a membrane electrode unit.

## Revendications

1. Unité d'électrode à membrane, comprenant une unité de diffusion de gaz (1) pour une pile à combustible (2), comprenant au moins deux couches de diffusion de gaz (3) réalisées sous forme plane au niveau des bords desquelles sont disposés des joints d'étanchéité (4), **caractérisée en ce qu'**au moins deux couches de diffusion de gaz (3) sont connectées les unes aux autres de manière articulée de telle sorte que les joints d'étanchéité (4) des couches de diffusion de gaz (3) soient connectés les uns aux autres, les joints d'étanchéité (4) étant connectés les uns aux autres par une bande de connexion (5) ou par des nervures (6).

2. Unité d'électrode à membrane selon la revendication 1, **caractérisée en ce que** les joints d'étanchéité (4) sont venus de matière et réalisés d'une seule pièce.

3. Unité d'électrode à membrane selon la revendication 1 ou 2, **caractérisée en ce que** la bande de connexion (5) ou la nervure (6) présente au moins d'un côté une encoche (10) ou un rétrécissement (11) s'étendant dans la direction longitudinale de la bande de connexion (5).

4. Unité d'électrode à membrane selon l'une quelconque des revendications 1 à 3, **caractérisée en ce que** les joints d'étanchéité (4) se composent d'un matériau polymère élastique.

5. Unité d'électrode à membrane selon l'une quelconque des revendications 1 à 4, **caractérisée en ce que** les joints d'étanchéité (4) se composent de silicone, de FKM, d'EPDM, de PIB, de TPE ou d'un mélange de ceux-ci.

6. Unité d'électrode à membrane selon l'une quelconque des revendications 1 à 5, **caractérisée en ce que** les joints d'étanchéité (4) sont fabriqués dans un procédé de façonnage.

7. Unité d'électrode à membrane selon l'une quelconque des revendications 1 à 6, **caractérisée en ce que** les joints d'étanchéité (4) sont moulés par injection sur la couche de diffusion de gaz (3).

8. Unité d'électrode à membrane selon l'une quelconque des revendications 1 à 7, **caractérisée en ce que** les joints d'étanchéité (4) présentent au moins un bourrelet d'étanchéité au moins partiellement périphérique (7).

9. Unité d'électrode à membrane selon l'une quelconque des revendications 1 à 8, **caractérisée en ce que** l'épaisseur de la couche de diffusion de gaz (3) est inférieure à 2 mm.

10. Unité d'électrode à membrane selon l'une quelconque des revendications 1 à 9, **caractérisée en ce que** les joints d'étanchéité (4) présentent au moins un bourrelet d'étanchéité au moins partiellement périphérique (7) et au moins un évidement au moins partiellement périphérique (8), l'évidement étant disposé à proximité du bourrelet d'étanchéité (7).

11. Unité d'électrode à membrane selon l'une quelconque des revendications 1 à 10, **caractérisée en ce que** les joints d'étanchéité (4) réalisent en outre l'étanchéité des orifices pour l'alimentation des milieux réactionnels (12) dans les plaques bipolaires.

12. Utilisation d'une unité de diffusion de gaz (1) pour une pile à combustible (2), comprenant au moins deux couches de diffusion de gaz réalisées sous forme plane (3) au niveau des bords desquelles sont disposés des joints d'étanchéité (4), **caractérisée en ce qu'**au moins deux couches de diffusion de gaz (3) sont connectées les unes aux autres de manière articulée de telle sorte que les joints d'étanchéité (4) des couches de diffusion de gaz (3) soient connectés les uns aux autres, les joints d'étanchéité (4) étant connectés les uns aux autres par une bande de connexion (5) ou par des nervures (6) en vue de fabriquer une unité d'électrode à membrane.
